# DEMANDE DE BREVET EUROPEEN

(11) **EP 4 765 684 A1**
(43) Date de publication de la demande: **24.06.2026**
(21) Numéro de dépôt: 25225394.3
(22) Date de dépôt: 19.12.2025
(51) Int. Cl.: H04B 10/70

(54) **SOURCE DE PHOTONS PRÉPARE-ET-MESURE POUR UNE COMMUNICATION QUANTIQUE**

(30) Priorité: 20.12.2024 FR 2414913
(71) Demandeur: THALES, 92190 Meudon (FR)
(72) Inventeur: LELOUP, Valentin, 31037 TOULOUSE CEDEX 1 (FR); FAUGERON, Mickael, 31037 TOULOUSE CEDEX 1 (FR)
(74) Mandataire: Lavoix

(57) **Abrégé**

La présente invention concerne un système de préparation de photons pour une communication quantique, le système comprenant une source de lumière polarisée (210), et une tête d'émission optique (211) comprenant un télescope (213) émettant les photons dans un canal. Le système comprend de plus un système de modulation de phase (205ad) appliqué à des photons produit par la source (210), ainsi qu'une première lame optique (202a, 204a, 204b) et une seconde lame optique (202b, 204c, 204d). La première lame optique (202a, 204a, 204b) sépare les photons suivant des chemins optiques distincts et la seconde lame (202b, 204c, 204d) recombinent les photons des chemins optiques ayant subi un traitement par le système de modulation de phase (205a-d). À l'issu du trajet entre la source (210) et la tête d'émission optique (211), la modulation de phase est adaptée à chacun des chemins distincts (215a-215d) pour contrôler la polarisation des photons émis dans le canal aux fins de la communication quantique.

## Description

La présente invention concerne les communications quantiques et plus particulièrement la génération de photons selon le protocole Prépare-et-Mesure dans des systèmes d'émission utilisés pour une communication quantique.

Les communications quantiques se fondent sur l'échange de photons, souvent en faible nombre, entre un émetteur et un récepteur. Cet échange peut être effectué en espace libre, par exemple lors d'une communication satellitaire ou être guidé au sein d'une fibre. Ces communications quantiques sont notamment employées dans l'échange de clés de cryptographie, aussi appelé distribution quantique de clés (Quantum Key distribution en anglais). Les méthodes de distribution quantique de clés reposent sur le fait que la présence d'une tierce personne dans la communication serait immédiatement détectée par le récepteur. Cette détection est due à la perturbation de l'état du photon lors de la mesure par la tierce personne, permettant ainsi à l'émetteur et au récepteur d'être informés que la communication n'est pas sécurisée.

Divers protocoles ont été développés pour permettre ces communications quantiques. Ils reposent sur le codage de l'information sur l'état du photon transmis, comme par exemple au travers de la polarisation du photon. C'est le cas du protocole Bennet et Brassard de 1984 en polarisation, appelé aussi BB84, dont le but est la transmission quantique de clé. Le photon est polarisé selon deux bases dans ce protocole, chacune des deux bases comprenant au moins deux éléments distincts permettant d'obtenir quatre polarisations différentes pour un photon. L'émetteur prépare le photon dans un des états polarisés, par exemple à l'aide de lames à retard telles que les lames demi-onde. Le photon, dont la polarisation est choisie en amont par l'émetteur, est transmis au récepteur. Le récepteur comprend un analyseur de polarisation et des détecteurs de photons uniques en bout de chaîne de réception afin de retrouver la polarisation initiale du photon reçu.

Cependant, la propagation du photon dans une fibre optique peut perturber sa polarisation. En outre, dans certains cas d'application, la source préparant les photons pour l'émission n'est pas localisée à proximité de l'émetteur, compris par exemple dans une tête d'émission optique. Les photons préparés doivent donc être transmis entre la source de photons et l'émetteur proprement dit. Ce trajet supplémentaire induit des risques de modification de la polarisation et donc de l'information transmise. En outre, ce trajet supplémentaire entre une tête d'émission optique comprenant l'émetteur et la source préparant les photons est présent pour des applications telles que les communications quantiques satellitaires. La source comprenant des éléments électroniques est en général incluses dans la charge utile du satellite, tandis que la tête optique est en contact avec l'environnement extérieur du satellite et est soumis à de fortes contraintes de températures ou de rayonnements.

Il est connu pour pallier le problème de la perturbation de polarisation, différentes méthodes telles que la transmission en espace libre entre la source de photons et l'émetteur, sans fibre optique. Il est aussi connu à l'inverse de transmettre chacune des polarisations au travers d'une fibre à maintien de polarisation.

La transmission en espace libre entre la source de photons et l'émetteur limite les modifications de la polarisation. Cependant une telle solution est difficilement envisageable dans certaines applications, par exemple satellitaires. La trajectoire définie en espace libre peut être altérée lors de la mise en orbite du satellite et notamment en raison des vibrations et effets thermiques. Il est donc difficile de corriger par la suite de telles altérations à distance.

La transmission de chaque photon dans des fibres nécessite en général soit une fibre à maintien de polarisation par polarisation utilisée dans le codage de l'information, soit une unique fibre qui n'est pas à maintien de polarisation. L'utilisation d'une fibre à maintien de polarisation par polarisation entre la source de photon et l'émetteur permet de conserver la polarisation initiale durant le trajet Cependant, cette méthode présente l'inconvénient qu'une tierce personne puisse déterminer la polarisation du photon qui sera émis par l'émetteur en observant chacune des fibres. Chaque fois qu'un photon ou plusieurs photons passent dans une fibre, une indication est donnée à la tierce personne de la polarisation qui sera émise et donc de l'information qui est transmise par l'émetteur est donnée également. La sécurité d'une telle solution n'est donc pas optimale.

L'utilisation d'une seule fibre optique qui n'est pas à maintien de polarisation semble palier ce défaut de sécurité. Cependant la modification de la polarisation lors du passage du photon dans la fibre entre la source de photons et l'émetteur est difficilement estimable et donc corrigeable, l'usage d'une unique fibre à maintien de polarisation pour tous les états du protocole n'étant pas possible. Cette méthode nécessite donc l'utilisation de références de polarisation ou d'une estimation des paramètres du canal fibre pour corriger la modification de polarisation lors du trajet. L'ajout de références de polarisation nécessite des émetteurs de référence de polarisation supplémentaires, bien souvent un laser d'une puissance plus importante, et il faut de plus que le chemin optique du signal de référence soit identique à celui du photon qui doit être corrigé. La correction de la polarisation par une estimation des paramètres du canal n'est possible que pour des modifications de la polarisation dû à la géométrie (rotation de l'émetteur par rapport au récepteur). Elle ne permet donc pas de corriger toutes les modifications de la polarisation.

Le but de l'invention est alors de proposer un système de préparation de photons pour une communication quantique permettant de générer des photons selon des polarisations distinctes tout en préservant la sécurité de la communication quantique et en réduisant les erreurs de polarisation.

A cet effet, l'invention a pour objet un système de préparation de photons pour une communication quantique, le système comprenant une source de lumière polarisée, et une tête d'émission optique émettant des photons dans un canal. Le système de préparation comprend de plus un système de modulation de phase appliqué à des photons produit par la source, ainsi qu'une première lame optique et une seconde lame optique. La première lame optique sépare les photons suivant des chemins optiques distincts et la seconde lame recombine les photons des chemins optiques ayant subi un traitement par le système de modulation de phase. À l'issu du trajet entre la source et la tête d'émission optique la modulation de phase est adaptée auxdits chemins optiques distincts pour contrôler la polarisation des photons émis dans le canal aux fins de la communication quantique
Comme l'état quantique du photon est préparé dans la tête d'émission optique, la transmission de photons entre la source de lumière polarisée et la tête d'émission est résistante à une attaque d'une tierce personne. L'état quantique du photon est déterminé au travers de sa polarisation par les différents déphasages appliqués selon les chemins optiques empruntés et la recombinaison au niveau de la seconde lame séparatrice. En effet, la différence entre deux phases de deux chemins optiques distincts permet d'obtenir la polarisation désirée lors de la recombinaison. Le système devient alors sécurisé contre une attaque puisque reconstitué au plus près de la tête d'émission optique. La communication devient alors plus sécurisée et fiable à l'aide du système constituant une source Prépare-et-Mesure efficace et sécurisée. La polarisation du photon est bien maintenue car les parties fibrées sont à maintien de polarisation.
Cette manière de faire permet d'obtenir un flux de photons ayant une polarisation maîtrisée déterminée lors de la recombinaison et dépendant de la phase des photons, contrôlée par le système de modulation de phase.

Suivant d'autres aspects avantageux de l'invention, le système comprend une ou plusieurs des caractéristiques suivantes, prises isolément ou suivant toutes les combinaisons techniquement possibles.

Dans un mode de réalisation, la tête d'émission optique comprend un télescope.

Dans un mode de réalisation, les chemins optiques sont de longueurs différentes.

Dans un mode de réalisation, le système comprend de plus une unité de commande pour contrôler le système de modulation de phase en fonction du message à transmettre dans la communication quantique.

Dans un mode de réalisation, au moins une des lames optiques est un séparateur de faisceau polarisé.

Dans un mode de réalisation, les photons produits par la source de lumière polarisée sont guidés jusqu'à la tête d'émission optique au moyen d'au moins une fibre optique à maintien de polarisation.

Dans un mode de réalisation, la tête d'émission optique comprend de plus une interface fibre optique-espace libre et les photons se propagent en espace libre dans la tête d'émission optique entre l'interface et le télescope.

Dans un mode de réalisation, le système comprend de plus une fibre optique commune à deux chemins optiques parmi les chemins optiques distincts, les photons provenant d'un des deux chemins optiques parcourant la fibre optique commune dans une première direction, et les photons provenant du second des deux chemins optiques parcourant la fibre commune dans une seconde direction, et le système de modulation de phase contrôlant la phase des photons traversant la fibre optique commune dans les deux directions.

Dans un mode de réalisation, la tête d'émission optique comprend de plus une troisième lame optique et deux circulateurs optiques d'au moins trois ports, un premier port étant couplé avec la première lame optique, un second port étant couplé avec la seconde lame optique pour un des deux circulateurs et avec la troisième lame optique pour le second circulateur et un troisième port étant couplé avec une interface fibre optique-espace libre aux fins de la circulation dans les deux directions dans la fibre commune.

Dans un mode de réalisation, le système comprenant quatre fibres optiques distinctes guidant les photons entre la source de lumière polarisée et la tête d'émission optique, les quatre fibres optiques formant chacune un chemin optique, les photons étant traités par le système de modulation de phase de manière indépendante dans chacune des fibres optiques et trois des quatre fibres optiques comprenant une ligne à retard.

Dans un mode de réalisation, la source de lumière polarisée étant disposée dans la charge utile d'un satellite et la tête d'émission optique étant à une interface entre le satellite et un environnement extérieur.

En outre, l'utilisation de chemins optiques de longueurs différentes permet d'influer sur la recombinaison et donc sur la polarisation que l'on souhaite obtenir aux fins de la communication quantique.

La tête d'émission optique comprenant un télescope permet une émission en espace libre depuis la tête optique, par exemple depuis un satellite.

L'unité de commande du système de modulation permet de choisir la phase pour les différents chemins optiques au travers du système de modulation et donc d'obtenir la bonne polarisation pour la communication quantique lors de la recombinaison.

De plus, l'utilisation d'une fibre optique commune dans laquelle les photons se propagent selon deux directions différentes permet de mieux contrôler une partie de la longueur des chemins optiques de façon à limiter les aléas quant à la longueur des chemins optiques et donc des aléas lors de la recombinaison. De cette façon, la recombinaison permet d'obtenir la polarisation souhaitée et donc l'état quantique associé à cette polarisation.

L'invention apparaîtra plus clairement à la lecture de la description qui va suivre, donnée uniquement à titre d'exemple non limitatif, et faite en référence aux dessins dans lesquels :
[Fig. 1] la figure 1 est un art antérieur de système de préparation de photons pour une communication quantique ;
[Fig. 2] la figure 2 est un système de préparation de photons pour une communication quantique selon un premier mode de réalisation ;
[Fig. 3] la figure 3 est un système de préparation de photons comprenant une boucle Sagnac selon un mode de réalisation de l'invention ;
[Fig. 4] la figure 4 est un système de préparation de photons comprenant deux boucles Sagnac selon un mode de réalisation de l'invention.

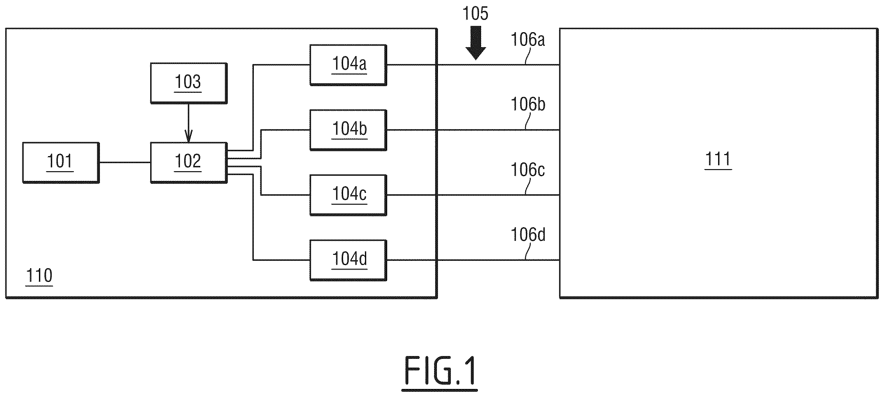

[Fig. 1] La figure 1 présente un art antérieur de système de préparation de photons pour une communication quantique. Le système comprend une source de lumière polarisée 110 comprenant un laser 101, un commutateur de polarisation 102, une unité de commande du commutateur 103 et quatre lames à retard 104a-d. Les quatre lames à retard 104a-d sont chacune couplées à des fibres optiques à maintien de polarisation, ainsi quatre fibres optiques sortent de la source de lumière polarisée 110. Les quatre fibres lient optiquement la source de lumière polarisée 110 et une tête d'émission optique 111 qui émet le photon polarisé pour la communication quantique.

Le laser 101 génère des photons qui sont directement transmis au commutateur 102 à l'aide d'une fibre optique à maintien de polarisation. Le commutateur 102 permet de diriger le photon reçu depuis le laser 101 vers une des 4 voies de polarisation. Le choix de la polarisation est fait par l'unité de commande 103 qui transmet l'information au commutateur 102. Pour une communication quantique, le nombre de polarisation employées doit être de quatre. Chaque polarisation peut représenter un bit à transmettre.

Ici sont représentées quatre polarisation différentes, chacune associée à une lame à retard 104a-d et une fibre optique à maintien de polarisation. Ainsi, chaque fibre optique sortant de la source de lumière polarisée 110 est associée à une polarisation particulière.

Un tel système est cependant sensible à des attaques de type « homme du milieu » où une tierce personne peut intercepter ou identifier les messages transmis entre le système et un récepteur. Chacune des fibres étant associé à une polarisation, une personne tierce peut reconstruire les messages en étant capable de savoir dans quelle fibre est émis le photon de la transmission.

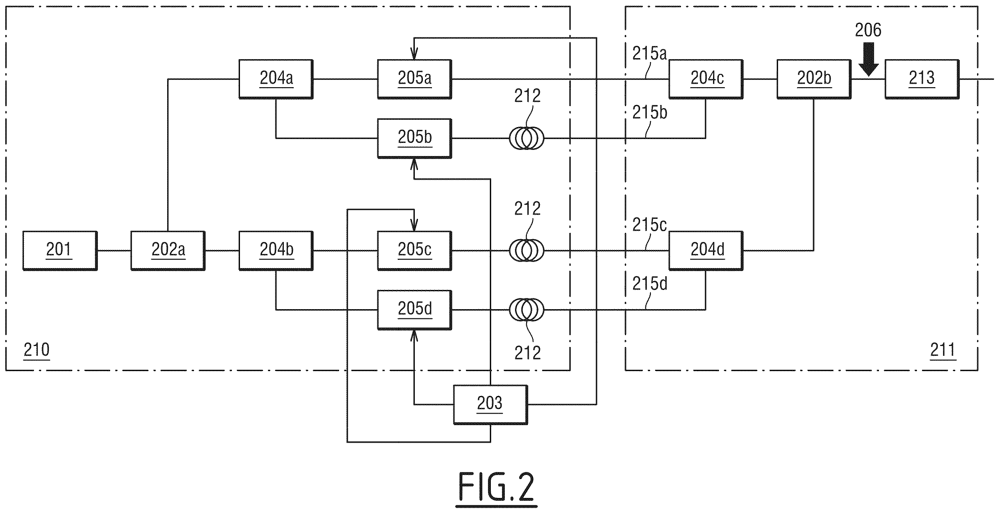

[Fig. 2] La figure 2 est un système de préparation de photons pour une communication quantique selon un premier mode de réalisation. Le système comprend une source de lumière polarisée 210 et une tête d'émission optique 211.

La source de lumière polarisée 210 génère des photons à l'aide d'un laser 201. Les photons sont guidés à l'aide d'une fibre à maintien de polarisation jusqu'à une première lame séparatrice 202 dans la source de lumière polarisée 210, séparant ainsi les photons qui lui parviennent selon deux chemins optiques distincts. Les photons sont ensuite guidés à l'aide d'une fibre à maintien de polarisation sur des séparateurs de flux polarisé 204a-b, séparant chacun les photons en deux nouveaux chemins optiques distincts. Il existe alors quatre chemins optiques distincts.

Chacun des quatre chemins optiques distincts comprend un modulateur de phase 205a-d constituant un système de modulation de phase. Chaque modulateur de phase 205a-d peut modifier la phase des photons qui le traverse, par exemple soit 0 soit π. La phase est choisie par une unité de commande 203 qui communique aux modulateurs de phase 205a-d. Les photons modulés en phase sont ensuite guidé au travers de fibres optiques à maintien de polarisation sur lequelle sont présents des lignes à retard 212. Les lignes à retard 212 ajoutent un décalage temporel aux photons qui les traversent.

Trois lignes à retard 212 sont présentes sur trois des quatre chemins optiques, ainsi un des chemins optiques est considéré comme une référence. Les lignes à retard 212 sont alors employées pour ajuster les temps de trajet des photons, ce qui revient à ajuster la longueur du chemin optique. Ces lignes à retard 212 peuvent avoir un retard variable qui est contrôlé pour obtenir la longueur de chemin optique que l'on souhaite.

Les quatre fibres optiques sortent de la source de lumière polarisée 210 et entrent dans la tête d'émission optique 211. Ces fibres optiques assurent un couplage optique entre la tête d'émission optique 211 et la source de lumière polarisée 210.

La tête d'émission optique 211 comprend en outre séparateurs de faisceau polarisés 204c-d qui recombinent chacune deux chemins optiques. Les photons en sortie de séparateurs de faisceaux polarisés 204c-d sont ensuite guidés par des fibres optiques à maintien de polarisation ou en espace libre dans une lame séparatrice 202b. La lame séparatrie 202b recombinent les photons provenant des séparateurs de faisceau polarisés 204c-d. Les photons sont ensuite transmis à un récepteur, par une transmission en espace libre ou fibrée au travers d'un dispositif d'émission optique 213. Ce dispositif d'émission optique 213 est par exemple un télescope, qui permet d'émettre les photons préparés par le système.

Cette recombinaison permet d'obtenir un photon selon une polarisation particulière en sortie 206 de la lame séparatrice 202b. Ce sont les différences de phase qui permettent d'obtenir la polarisation désirée et dont l'état quantique du photon pour la communication quantique. Dans le cadre où quatre états sont envisagés, par exemple les états de polarisation horizontale, verticale, diagonale et antidiagonale (notés H, V, D et A), une différence de phase de 0 entre la voie du modulateur de phase 205b et la voie du modulateur de phase 205d, ainsi qu'une différence de phase de π entre les voies des modulateurs de phase 205a et 205c permet d'obtenir un photon dans l'état quantique V.

Cette recombinaison est à la fois contrôlée par les modulateurs de phases 205a-d, eux-même sous le contrôle de l'unité de commande 203, mais aussi par les chemins optiques et les lignes de retard 212 à retard variable.

Le système permet alors de produire un photon dans un état quantique particulier, le laser 201 générant un photon, et selon le principe de la mécanique quantique, cet unique photon est à la fois dans les quatre voies comprenant les quatre modulateurs de phase 205a-d. Ainsi la recombinaison en sortie 206 de la lame séparatrice 202b ne concerne qu'un photon.

De cette façon, une tierce personne n'est pas en mesure de remonter à l'état du photon en observant les liaisons entre la tête d'émission optique 211 et la source de lumière polarisée 210, la recombinaison ayant lieu à l'intérieur même de la tête d'émission optique 211.

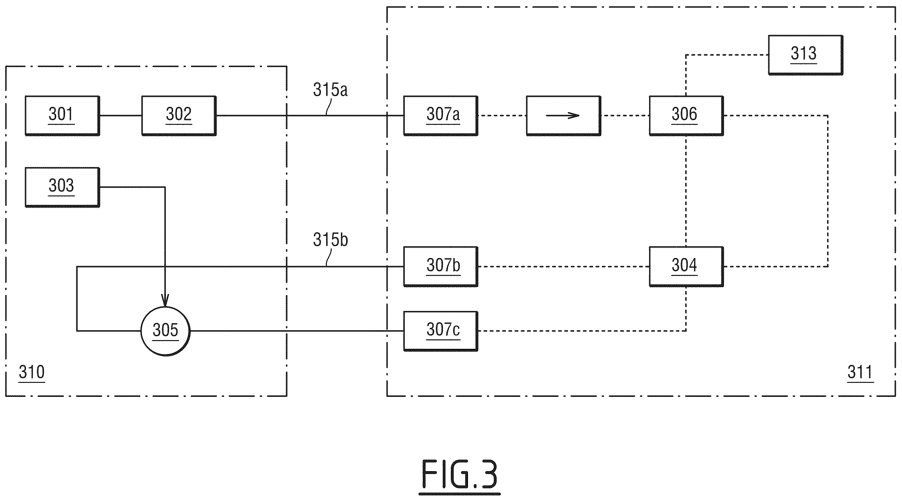

[Fig. 3] La figure 3 est un système de préparation de photons comprenant une boucle Sagnac selon un mode de réalisation de l'invention. Le système comprend une source de lumière polarisée 310 et une tête d'émission optique 311.

La source de lumière polarisée comprend un laser 301 générant des photons guidés dans une fibre optique à maintien de polarisation jusqu'à une lame à retard 302. La lame à retard 302 modifie la polarisation en retardant une composante de la polarisation par rapport à une autre. Les photons sont guidés par une fibre optique à maintien de polarisation jusqu'à la tête d'émission optique 311 et une première interface fibre-espace libre 307a. L'interface permet de passer à une propagation guidée dans une fibre optique à une propagation en espace libre au sein de la tête d'émission optique 311, cette propagation en espace libre est représenté en pointillé.

Les photons se propagent dans la tête d'émission optique 311 jusqu'à une lame séparatrice 306 séparant les photons en deux chemins optiques, l'un plus long que l'autre, jusqu'à un séparateur de faisceau polarisé 304 séparant les photons en deux nouveaux chemins optiques distincts. Comme les chemins optiques en sortie de la lame séparatrice 306 sont de longueurs différentes, un photon passant par le chemin plus court atteint le séparateur de faisceau polarisé 304 avant celui se propageant selon le deuxième chemin optique, plus long. Il y a donc un premier décalage temporel induit par cette différence de longueur.

Les photons des deux chemins optiques se propagent jusqu'à deux interfaces fibre-espace libre 307b-c, les longueurs des chemins optiques étant différentes, et les photons se propagent ensuite dans une fibre optique à maintien de polarisation. La fibre relie l'interface fibre-espace libre 307b à l'interface fibre-espace libre 307c, formant une boucle.

La boucle formée par la fibre optique à maintien de polarisation entre les deux interfaces fibre-espace libre 307b-c est une boucle Sagnac. Les photons pénétrant dans la fibre optique par l'interface fibre-espace libre 307b se propagent selon une première direction (par exemple sens anti-horaire) dans la fibre, de l'interface fibre-espace libre 307b à l'interface fibre-espace libre 307c.

De la même manière, les photons pénétrant dans la fibre optique par l'interface fibre-espace libre 307c se propagent dans une seconde direction (sens horaire) depuis l'interface fibre-espace libre 307c à l'interface fibre-espace libre 307b. Les photons se propagent donc dans les deux directions au travers de la fibre, la longueur du chemin optique est donc la même pour un photon provenant de l'interface fibre-espace libre 307b ou 307c.

Un modulateur de phase 305 est placé sur le chemin optique des photons guidés dans la fibre optique entre les interfaces fibre-espace libre 307b-c. Ce modulateur de phase 305 est dans la source de lumière polarisée 310 et est contrôlé par une unité de commande 303 qui permet de choisir le déphasage appliqué au photon.

Ainsi, la boucle de la fibre optique à maintien de polarisation quitte la tête d'émission optique 311 et passent dans la source quantique de photon 310, de cette façon, uniquement des segments de fibres optiques à maintien de polarisation sont en dehors de la source de lumière polarisée 310 et de la tête d'émission optique 311.

Le modulateur de phase 305 est placé de façon à ne pas être au milieu de la longueur de la fibre. Il est alors possible d'appliquer un déphasage différent à des photons parcourant la fibre dans une direction ou dans l'autre, puisque dans une direction, les photons atteignent plus rapidement le modulateur de phase 305 que ceux parcourant dans l'autre direction. En outre, le modulateur de phase 305 est un modulateur de phase rapide, et peut donc changer rapidement de déphasage à appliquer aux photons le traversant.

Les photons atteignent ensuite les interfaces fibre-espace libre 307b ou 307c en fonction de leur direction de propagation. Les photons se propagent selon le chemin inverse, jusqu'au séparateur de faisceau polarisé 304 puis jusqu'à la lame séparatrice 306.

Une première recombinaison a lieu au séparateur de faisceau polarisé 304, puis une seconde recombinaison a lieu à la lame séparatrice 306, de telle sorte qu'en sortie de la lame séparatrice 306, un photon est obtenu avec une polarisation prédéterminée. Le photon est donc dans un état quantique prédéterminé pour être employé dans la communication quantique et être transmis à un récepteur, par une propagation en espace libre ou guidée dans une fibre. La transmission est effectuée par un dispositif d'émission optique 313 présent dans la tête d'émission optique 311 et le dispositif d'émission optique 313 permet l'émission des photons préparés par le système. Il agit en qualité d'émetteur optique dans la tête d'émission optique 311. Ce dispositif d'émission optique 313 est par exemple un télescope.

La boucle de Sagnac permet une recombinaison cohérente des photons en sortie de la lame séparatrice 306 après les déphasages appliqués aux photons. Les différences de longueurs des chemins optiques sont compensées par le fait que les photons parcourent dans les deux sens les différents chemins optiques avant et après la sortie de la boucle de Sagnac. En outre, dans le cadre d'une communication quantique, un seul photon est émis selon un état quantique particulier, qui est obtenu lors de la recombinaison.

La description précédente s'applique à un unique photon, puisque selon le principe de la mécanique quantique, cet unique photon peut être dans les différentes voies constituées des différents chemins optiques. Ainsi, la recombinaison du photon au niveau de la lame séparatrice 306 permet d'obtenir le photon dans l'état quantique souhaité et une tierce personne ne saurait intercepter ou estimer le photon transmis en observant les transmissions entre la source de lumière polarisée 310 et la tête d'émission optique 311.

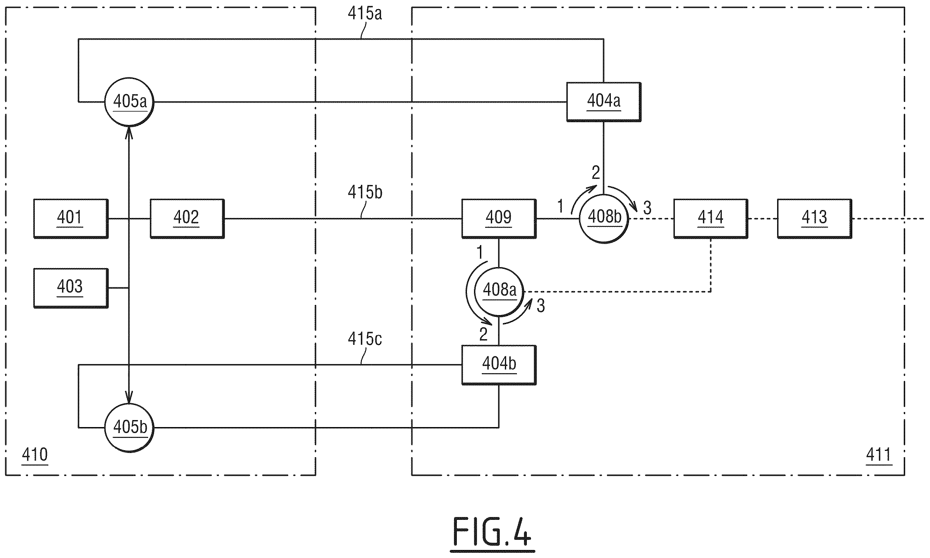

[Fig. 4] La figure 4 est un système de préparation de photons comprenant deux boucles Sagnac selon un mode de réalisation de l'invention.

Le système comprend une source de lumière polarisée 410 et une tête d'émission optique 411. La source de lumière polarisée 410 comprend un laser 401 générant des photons guidés au travers d'une fibre optique à maintien de polarisation jusqu'à une lame à retard 402. Les photons déphasés par la lame à retard 402 sont guidés en dehors de la source de lumière polarisée 410 jusqu'à la tête d'émission optique 411 et une lame séparatrice 409. Les photons sont séparés en deux chemins optiques distintcs, chacun des chemins optiques menant à un circulateur optique 408a-b.

Le circulateur optique 408b connecte les chemins optiques provenant de la lame séparatrice 409, d'un séparateur de faisceau polarisé 404a et d'un élément optique 414. De la même manière, le circulateur optique 408a connecte les chemins optiques provenant de la lame séparatrice 409, d'un séparateur de faisceau polarisé 404b et l'élément optique 414.

Les photons provenant de la lame séparatrice 409 et entrant dans le circulateur optique 408b par le port 1 sont dirigés vers le séparateur de faisceau polarisé 404a par le port 2. Le séparateur de faisceau polarisé 404a sépare les photons selon deux chemins optiques dans une fibre optique à maintien de polarisation. Ces deux chemins forment une boucle de Sagnac, qui est parcouru dans une direction selon le premier chemin optique et dans l'autre direction selon le deuxième chemin optique. Cette boucle quitte la tête d'émission optique 411 et entrent dans la source de lumière polarisée 410. La boucle comprend un modulateur de phase 405a qui est traversé par les photons selon les deux directions.

Le modulateur de phase 405a n'est pas placé au milieu de la longueur de la fibre optique formant la boucle, de façon à ce qu'un déphasage différent puisse être appliqué à un photon traversant le modulateur de phase 405a selon une direction par rapport à un photon parcourant la boucle dans l'autre direction. Le modulateur de phase 405a applique un déphasage commandé par l'unité de commande 403 présente dans la source de lumière polarisée 410.

Les modulateurs de phase 405a -b forment le système de modulation de phase, contrôlé par l'unité de commande 403.

Les photons parcourant la boucle dans les deux directions sont recombinés par le séparateur de faisceau polarisé 404a puis dirigés vers le circulateur optique 408b. Les photons pénètrent dans le circulateur optique 408b par le port 2 puis guidés vers un dispositif d'émission optique 413 par le port 3. Les photons recombinés se propagent jusqu'au dispositif d'émission optique 413 par propagation en espace libre, représentée ici en pointillé.

De la même façon, les photons que précédemment, les photons parcourent le trajet optique par le circulateur optique 408a au travers de la seconde boucle de Sagnac formée par une fibre optique à maintien de polarisation et du modulateur de phase 405b. Le modulateur de phase 405b est contrôlé par l'unité de commande 403 et permet d'appliquer un déphasage aux photons le traversant. Le modulateur de phase 405b est spécifiquement disposé sur la fibre optique formant la boucle de Sagnac de manière à ne pas être au milieu de la longueur de la fibre. Ainsi un déphasage différent est appliqué aux photons qui le traversent à des instants différents, notamment car la longueur du chemin optique pour atteindre le modulateur de phase 405b n'est pas la même pour deux photons se propageant dans des directions différentes dans la boucle.

La recombinaison des photons provenant des deux boucles de Sagnac se fait au niveau d'un élément optique 414. Les photons recombinés sont ensuite guidés jusqu'au dispositif d'émission optique 413. Ce dispositif d'émission optique 413 est par exemple un télescope. Il est ainsi obtenu un photon selon un état quantique particulier avec la polarisation souhaitée. Ainsi, le système peut générer un unique photon dans un état quantique particulier, puisqu'à partir d'un unique photon et selon les principes de la mécanique quantique, tant qu'aucune mesure n'est effectuée, le photon est à la fois dans chacune des voies constituées des chemins optiques différentes menant aux boucles de Sagnac. Un unique photon parcourt donc les deux boucles de Sagnac, dans les deux sens et en même-temps et est recombiné pour obtenir un photon dans un état quantique désiré à l'aide d'une polarisation particulière.

Cette polarisation étant obtenue par les différences de déphasages appliqués aux photons au cours de leur propagation dans le système. Puisque la recombinaison, et donc la création de l'état quantique désiré du photon, a lieu dans la tête d'émission optique 411, une observation des échanges entre la source de lumière polarisée 410 et la tête d'émission optique 411, ne permet pas d'obtenir d'informations quant aux photons émis lors de la transmission quantique par le dispositif d'émission optique 413.

En effet, uniquement des fibres optiques à maintien de polarisation se trouvent entre la source de lumière polarisée 410 et la tête d'émission optique 411, ces fibres ne transportant pas de photons déjà dans l'état quantique souhaité pour la communication.

## Revendications

1. Système de préparation de photons pour une communication quantique, le système comprenant une source de lumière polarisée (210), et une tête d'émission optique (211) émettant des photons dans un canal, le système de préparation étant **caractérisé en ce que** le système de préparation comprend de plus un système de modulation de phase (205a-d) appliqué à des photons produit par la source (210), ainsi qu'une première lame optique (202a, 204a, 204b) et une seconde lame optique (202b, 204c, 204d), la première lame optique (202a, 204a, 204b) séparant les photons suivant des chemins optiques distincts (215a-d) et la seconde lame (202b, 204c, 204d) recombinant les photons des chemins optiques ayant subi un traitement par le système de modulation de phase (205a-d) et à l'issu du trajet entre la source (210) et la tête d'émission optique (211), la modulation de phase étant adaptée aux dits chemins optiques distincts (215a-d) pour contrôler la polarisation des photons émis dans le canal aux fins de la communication quantique.

2. Système de préparation de photons pour une communication quantique selon la revendication 1, la tête d'émission optique comprend un télescope (213, 313, 413).

3. Système de préparation de photons pour une communication quantique selon la revendication 1 ou la revendication 2, les chemins optiques (215a-d) sont de longueurs différentes.

4. Système de préparation de photons pour une communication quantique selon l'une des revendications 1 à 3, le système comprend de plus une unité de commande (203) pour contrôler le système de modulation de phase (205a-d) en fonction du message à transmettre dans la communication quantique.

5. Système de préparation de photons pour une communication quantique selon l'une des revendications 1 à 4, au moins une des lames optiques (204a-d) est un séparateur de faisceau polarisé.

6. Système de préparation de photons pour une communication quantique selon l'une des revendications 1 à 5, les photons produits par la source de lumière polarisée (210) sont guidés jusqu'à la tête d'émission optique (211) au moyen d'au moins une fibre optique à maintien de polarisation.

7. Système de préparation de photons pour une communication quantique selon l'une des revendications 1 à 6, la tête d'émission optique (311) comprend de plus une interface fibre optique-espace libre (307a-c) et les photons se propagent en espace libre dans la tête d'émission optique (311) entre l'interface (307a-c) et le télescope (311).

8. Système de préparation de photons pour une communication quantique selon l'une des revendications 1 à 7, le système comprend de plus une fibre optique commune (315b, 415a, 415c) à deux chemins optiques parmi les chemins optiques distincts, les photons provenant d'un des deux chemins optiques parcourant la fibre optique commune (315b, 415a, 415c) dans une première direction, et les photons provenant du second des deux chemins optiques parcourant la fibre commune (315b, 415a, 415c) dans une seconde direction, et le système de modulation de phase (305, 405a, 405b) contrôlant la phase des photons traversant la fibre optique commune (315b, 415a, 415c) dans les deux directions.

9. Système de préparation de photons pour une communication quantique selon la revendication 8, la tête d'émission optique (410) comprend de plus une troisième lame optique (404b) et deux circulateurs optiques (408a, 408b) d'au moins trois ports (1, 2, 3), un premier port (1) étant couplé avec la première lame optique (409), un second port (2) étant couplé avec la seconde lame optique (404a) pour un des deux circulateurs (408b) et avec la troisième lame optique (404b) pour le second circulateur (408a) et un troisième port (3) étant couplé avec une interface fibre optique-espace libre aux fins de la circulation dans les deux directions dans la fibre commune.

10. Système de préparation de photons pour une communication quantique selon l'une des revendications 1 à 6, le système comprenant quatre fibres optiques distinctes guidant les photons entre la source de lumière polarisée (210) et le tête d'émission optique (211), les quatre fibres optiques formant chacune un chemin optique (215a-d), les photons étant traités par le système de modulation de phase (205a-d) de manière indépendante dans chacune des fibres optiques et trois des quatre fibres optiques comprenant une ligne à retard (212).

11. Système de préparation de photons pour une communication quantique selon l'une des revendications précédentes, la source de lumière polarisée (210, 310, 410) étant disposée dans la charge utile d'un satellite et la tête d'émission optique (211, 311, 411) étant à une interface entre le satellite et un environnement extérieur.
